# EUROPÄISCHE PATENTSCHRIFT

(11) **EP 2 283 730 B1**
(45) Veröffentlichungstag und Bekanntmachung des Hinweises auf die Patenterteilung: **09.11.2016**
(21) Anmeldenummer: 10015002.8
(22) Anmeldetag: 06.07.2007
(51) Int. Cl.: A22C 13/00, B32B 27/08, B32B 27/32, B32B 27/36

(54) **Mehrschichtige flächen- oder schlauchförmige Nahrungsmittelhülle oder -folie**
Multi-layer flat or hose-shaped foodstuff container or film
Emballage ou feuille d'aliment plat ou cylindrique multicouches

(30) Priorität: 29.09.2006 DE 102006046483
(43) Veröffentlichungstag der Anmeldung: 16.02.2011
(62) Teilanmeldung aus: 07785930.4
(73) Patentinhaber: Kuhne Anlagenbau GmbH, 53757 St. Augustin/Menden (DE)
(72) Erfinder: Schiffmann, Jürgen, 53773 Hennef (DE)
(74) Vertreter: Kuhnen & Wacker

(56) Entgegenhaltungen:
- DE-A1- 10 227 580
- DE-A1- 10 254 172
- DE-U1- 20 220 753

## Beschreibung

Die vorliegende Erfindung betrifft eine, insbesondere im Düsenblasverfahren hergestellte und im Tripple Bubble Verfahren biaxial verstreckte, flächen- oder schlauchförmige Nahrungsmittelhülle oder -folie für Lebensmittelverpackungen, wie beispielsweise Schrumpfbeutel, Siegelfolien oder dergleichen, nach dem Oberbegriff des Anspruchs 1.

In der Praxis werden derartige mehrschichtige schlauch- oder flächenförmige Verpackungsfolien bereits als 5- oder 7-schichtige Folie eingesetzt (vgl. Dokument DE 102 27 580 A1).

So beschreibt beispielsweise die EP 0 236 099 B2 eine als Verpackungssauerstoffsperrfilm bezeichnete, mehrschichtige, schlauchförmige Verpackungsfolie für Lebensmittel mit bis zu 7 Schichten. Nachteilig ist bei dieser beschriebenen Folie jedoch, dass die Außenschicht aus einem Polyolefin (kurz: PO) besteht, welches zwar die inneren Schichten gut vor Feuchtigkeit schützt, aber keine deutlich höhere Temperaturbeständigkeit gegenüber der Innenschicht (Siegelschicht) aufweist.

Die EP 0 476 836 B1 diskutiert eine 6-schichtige Verpackungsfolie, welche gegenüber der EP 0 236 099 B2 zwar eine temperaturbeständige Außenschicht aus PET enthält, die aus EVOH und PA bestehenden Kernschichten für die Sauerstoffbarriere und die mechanische Festigkeit jedoch nicht durch eine gesonderte, reine PO-Schicht vor Feuchtigkeit geschützt werden, da weder das PET noch der Haftvermittler (nachfolgend kurz: HV) diesen Ansprüchen an die Wasserdampfbarriere genügen.

Ferner führt das Fehlen einer äußeren PO-Schicht zu einer sehr starken Rollneigung (Curling) nach Außen.

Auch die EP 1 034 076 B1 diskutiert eine als heißschrumpffähige thermoplastische Mehrschichtfolie bezeichnete Verpackungsfolie mit einer aus PA bestehenden temperaturbeständiger Außenschicht. Hierbei handelt es sich jedoch lediglich um eine 5-schichtige Struktur, welche zudem ebenfalls keinerlei PO-Schicht als Wasserdampfbarriere von Außen aufweist. Daher kommt es hierbei erst recht zu sehr starker Rollneigung bei gleichzeitig stark beeinträchtigter Wasserdampfbarriere sowie stark beeinträchtigter Festigkeit, da sowohl das EVOH wie auch das PA der Feuchtigkeit schutzlos ausgesetzt sind.

Ferner zeigt die PCT/EP2004/051560, veröffentlicht als WO 2005/011978 A1 eine 5-schichtige Verpackungsfolie mit einer temperaturbeständigen Außenschicht aus PET und einer Kernschicht für Barriere aus EVOH. Aber auch hier ist keine Feuchtigkeitsbarriere von Außen vorgesehen. Darüber hinaus handelt es sich bei dem in der PCT/EP2004/051560 diskutierten Herstellungsverfahren um ein komplett anderes Herstellungsverfahren. Die in der PCT/EP2004/051560 beschriebenen Folien werden nämlich nicht im Blasfolienprozess mit biaxialer Verstreckung (Tripple-Bubble-Prozess) sondern im Flachfolienprozess mit biaxialer Verstreckung (Tenderframe-Prozess) hergestellt.

Dementsprechend ist es Aufgabe der vorliegenden Erfindung - unter Vermeidung der vorstehend diskutierten Nachteile - eine gattungsgemäße mehrschichtige flächen- oder schlauchförmige Nahrungsmittelhülle oder -folie derart weiterzubilden, dass eine ausreichend dichte Sauerstoffbarriere bei einer zugleich hohen Wasserdampfbarriere bei hervorragender mechanischer Festigkeit, ausgezeichneten optischen Eigenschaften, guter Weiterverarbeitbarkeit, hoher Temperaturbeständigkeit der Außenschicht und einer zufrieden stellenden Schrumpfrate zur Verfügung gestellt werden kann.

Diese Aufgabe und Aspekte werden durch die Merkmale des Anspruchs 1 gelöst.

Erfindungsgemäß wird hierbei eine mehrschichtige, insbesondere im Düsenblasverfahren hergestellte und im Tripple-Bubble-Verfahren biaxial vertreckte, flächen- oder schlauchförmige Nahrungsmittelhülle oder -folie für Lebensmittelverpackungen wie beispielsweise Schrumpffolien, Siegelfolien oder dergleichen, vorgeschlagen, die sich erstmals durch folgende, von außen nach innen gezählten Schichtaufbauten mit wenigstens sieben Schichten auszeichnet.

Dabei enthält die erste Schicht von außen als Schichtbestandteil Polycaprolactam (PA6), Polyhexamethylenadipinamid (PA66), PA6/66, PA11, PA 12, oder Mischungen aus diesen Polyamiden oder dergleichen oder Polyolefin, vorzugsweise PP oder HDPE, oder Mischungen von verschiedenen Polyolefinen oder COC oder eine Mischung aus COC und einem Polyolefin oder PC (Polycarbonat) oder PS (Polystyrol), die zweite Schicht einen Haftvermittler, die dritte Schicht ein Ionomer, die vierte Schicht einen Haftvermittler, die fünfte Schicht ein EVOH, die sechste Schicht einen Haftvermittler, und die siebte Schicht von außen, die zugleich die innerste Schicht ist, ein Polyolefin vorzugsweise Polyethylen.

Das EVOH bildet hierbei in vorteilhafter Weise die gewünschte Sauerstoffbarriere. Das Ionomer ermöglicht die Sicherstellung der gewünschten mechanischen Eigenschaften.

Mit dem PO wird ferner die benötigte Wasserdampfbarriere erreicht und es kann positiv auf die Siegelbarkeit der Innenschicht eingewirkt werden, d.h. es wird eine hohe Siegelnahtfestigkeit bei möglichst niedriger Siegeltemperatur erzielbar.

Die Polyolefine umfassen dabei in vorteilhafter Weise sowohl PE als auch EVA und EM(M)A im Sinne dieser Anmeldung sowie Mischungen von Polyolefinen als solchen als auch mit Ionomeren.

Weiterhin steht EVA gleichsam für EVA als auch für Mischungen von EVA mit Polymeren, Ionomeren oder EM(M)A. Die Haftvermittler (kurz HV) stehen für eine Klebeschicht. Unter EVOH sollen sowohl EVOH als auch Mischungen von EVOH mit anderen Polymeren verstanden werden.

Dabei wird in vorteilhafter Weise eine Nahrungsmittelhülle- oder folie für Lebensmittelverpackungen geschaffen, mit der alternativ ein gezielt hoher Schrumpf von bis zu 60 % oder ein demgegenüber gezielt niedriger Schrumpf von bis zu 0% möglich ist.

Für Schrumpfbeutel oder dergleichen ist mit den erstmalig vorgeschlagenen Schichtaufbauten in vorteilhafter Weise ein besonders hoher Schrumpf erzielbar, der wenigstens 30 bis 70%, vorzugsweise wenigstens 40 bis 60% beträgt, gemessen bei einer Wassertemperatur von etwa 90°C.

Für Siegelfolien oder dergleichen ist mit den erstmalig vorgeschlagenen Schichtaufbauten in vorteilhafter Weise ein besonders niedriger Schrumpf erzielbar, der höchstens 0 - 30 %, vorzugsweise 2 - 5% beträgt, gemessen bei einer Wassertemperatur von etwa 90°C.

Für die bei Schrumpfbeuteln bzw. Siegelfolien vorzusehenden Siegelschichten auf der Innenseite kann bei den erstmalig vorgeschlagenen Schichtaufbauten vorteilhaft als Rohstoff beispielsweise ein Polyolefin, vorzugsweise mit LDPE, LLDPE, EVA, EM(M)A, Ionomeren oder POP oder Mischungen hiervon oder dergleichen vorgesehen werden.

Aufgrund der durch den Schichtbestandteil EVOH erzielten, besonders ausgeprägten Sauerstoffbarriere ist eine hervorragende Haltbarkeit der damit verpackten Lebensmittel über mehrere Wochen ohne jegliche Qualitätsminderung gewährleistet.

Dank der extrem gut ausgebildeten Sauerstoffbarriere steht mit der erfindungsgemäßen Nahrungsmittelhülle oder -folie zudem erstmals eine Lebensmittelverpackung zur Verfügung, mit der auch besonders luftempfindliche Güter selbst bei langen Lagerzeiten keiner farblichen Veränderung unterzogen sind oder gar Gefahr laufen, durch Eintritt von Sauerstoff zu altern oder ihren Geschmack oder ihr Aroma zu verändern.

Da die Barriereeigenschaften von EVOH durch Feuchtigkeit negativ beeinträchtigt werden können, ist ein sandwichartiger Schichtaufbau, d.h. die Einbettung des EVOH zwischen zwei Polyolefin-Schichten als Wasserdampfbarriere von innen und außen bevorzugt.

Damit kann eine hervorragende Wasserdampfbarriere zur Verfügung gestellt werden, was insbesondere bei Fleisch oder anderen Lebensmitteln, die frischhaltebedürftig sind, entscheidend ist. Mit der erfindungsgemäßen Nahrungsmittelhülle oder -folie verpackte Lebensmittel bleiben deshalb besonders lange frisch.

Aufgrund der niedrigen Wasserdampfdurchlässigkeit bleiben die Gewichtsverluste beim Lagern der Lebensmittel und insbesondere beim Lagern von Fleisch besonders gering.

Weiter lässt sich die erfindungsgemäße Nahrungsmittelhülle oder -folie besonders gut mit entsprechenden Anlagen der selben Anmelderin herstellen und weiterverarbeiten.

Vorteilhafte Aspekte oder Weiterbildungen der Erfindung ergeben sich aus den Merkmalen der Unteransprüche.

So ist es bei einer bevorzugten Ausführungsform der erfindungsgemäßen Nahrungsmittelhülle oder -folie für Lebensmittelverpackungen vorgesehen, dass Schichten, die Polyethylen als Schichtbestandteil enthalten, alternativ auch Polypropylen, EVA (Ethyl-Vinyl-Alkohol), EM(M)A, Ionomere oder Mischungen von diesen oder dergleichen enthalten.

Weiterhin ist einer bevorzugten Ausführungsform vorgesehen, dass Schichten, die einen Haftvermittler enthalten, einen Haftvermittler aufweisen, der auf PE, EVA, EM(M)A oder einem Ionomer als Grundstoff basiert.

Gemäß einer weiter bevorzugten Ausführungsform ist vorgesehen, dass Schichten, die einen Haftvermittler als Bestandteil aufweisen, alternativ ein Gemisch aus Polyolefin und Haftvermittler oder ein Gemisch aus EVA und/oder EM(M)A und Haftvermittler enthalten.

Entsprechend einer weiter bevorzugten Ausführungsform ist vorgesehen, dass Schichten, die EVOH als Schichtbestandteil aufweisen, alternativ MXD6 (modifiziertes Polyamid) enthalten.

In einer weiteren bevorzugten Ausführungsform ist vorgesehen, dass Schichten die EVOH als Bestandteil aufweisen, alternativ PVA enthalten.

Entsprechend einer weiteren bevorzugten Ausführung ist vorgesehen, dass Schichten die EVOH, PVA oder MXD6 enthalten, alternativ Mischungen dieser Rohstoffe mit PA enthalten.

Weiter bevorzugte Ausführungsformen sehen schließlich vor, daß die flächen- oder schlauchförmige Nahrungsmittelhülle oder -folie als Lebensmittelverpackung in Form eines Schrumpfbeutels oder einer Siegelfolie ausgestaltet ist

## Patentansprüche

1. Mehrschichtige, im Düsenblasverfahren hergestellte und im Tripple Bubble Verfahren biaxial verstreckte, flächen- oder schlauchförmige Nahrungsmittelhülle oder -folie für Lebensmittelverpackungen, **gekennzeichnet durch** folgenden, von außen nach innen gezählten Schichtaufbau, mit wenigstens sieben Schichten, **dadurch** gekennzeichnet, daß:
- eine erste Schicht von außen als Schichtbestandteil Polycaprolactam (PA6), Polyhexamethylenadipinamid (PA66), PA6/66, PA11, PA 12, oder Mischungen aus diesen Polyamiden; Polyolefin, vorzugsweise PP oder HDPE, oder Mischungen von verschiedenen Polyolefinen; COC oder eine Mischung aus COC und einem Polyolefin; PC (Polycarbonat); oder PS (Polystyrol),
- eine zweite Schicht von außen als Schichtbestandteil einen Haftvermittler,
- eine dritte Schicht von außen als Schichtbestandteil ein Ionomer,
- eine vierte Schicht von außen als Schichtbestandteil Haftvermittler,
- eine fünfte Schicht von außen als Schichtbestandteil EVOH,
- eine sechste Schicht von außen als Schichtbestandteil Haftvermittler,
- eine siebte Schicht von außen als Schichtbestandteil ein Polyolefin, vorzugsweise Polyethylen,
enthält.

2. Nahrungsmittelhülle oder -folie Anspruch 1, **dadurch gekennzeichnet, dass** Schichten, die ein Polyolefin, vorzugsweise Polyethylen, als Schichtbestandteil enthalten, alternativ auch weitere Polyolefine, Polypropylen, EVA, EM(M)A, Ionomere oder Mischungen von diesen oder dergleichen enthalten.

3. Nahrungsmittelhülle oder -folie Anspruch 1 oder 2, **dadurch gekennzeichnet, dass** Schichten, die einen Haftvermittler enthalten, einen Haftvermittler aufweisen, der auf PE, PP, EVA, EM(M)A oder einem Ionomer als Grundstoff basiert.

4. Nahrungsmittelhülle oder -folie nach einem der Ansprüche 1 bis 3, **dadurch gekennzeichnet, dass** Schichten, die einen Haftvermittler aufweisen, alternativ ein Gemisch aus Polyolefin und Haftvermittler oder ein Gemisch aus EVA und/oder EM(M)A und Haftvermittler oder Ionomer und Haftvermittler, oder unterschiedliche Haftvermittler beziehungsweise Mischungen davon in den einzelnen Schichten enthalten.

5. Nahrungsmittelhülle oder -folie nach einem der Ansprüche 1 bis 4, dadurch gekennezeichnet, dass Schichten, die EVOH als Schichtbestandteil aufweisen, alternativ MXD6 (modifiziertes Polyamid 6) enthalten.

6. Nahrungsmittelhülle oder -folie nach einem der Ansprüche 1 bis 5, **dadurch gekennzeichnet, dass** Schichten, die EVOH als Schichtbestandteil aufweisen, alternativ PVA (Polyvinylalkohol) enthalten.

7. Nahrungsmittelhülle oder -folie nach einem der Ansprüche 1 bis 6, **dadurch gekennzeichnet, dass** Schichten, die EVOH, PVA oder MXD6 aufweisen, alternativ Mischungen dieser Rohstoffe mit PA enthalten.

8. Nahrungsmittelhülle oder -folie nach einem der Ansprüche 1 bis 7, **dadurch gekennzeichnet, daß** diese als Lebensmittelverpackung in Form eines Schrumpfbeutels oder einer Siegelfolie ausgestaltet ist.

## Claims

1. A multilayered two-dimensional or tubular food casing or food film for food packagings which is produced by the nozzle blast-drawing process and biaxially oriented by the triple-bubble process, **characterized by** the following laminated structure including at least seven layers that are counted from the outside to the inside, **characterized in that**:
- a first layer from the outside contains polycaprolactame (PA6), polyhexamethylene adipinamide (PA66), PA6/66, PA11, PA12, or blends of these polyamides; a polyolefin, preferably PP or HDPE, or blends of different polyolefins; COC or a blend of COC and a polyolefin; PC (polycarbonate); or PS (polystyrene) as a layer component,
- a second layer from the outside contains an adhesion promoter as a layer component,
- a third layer from the outside contains an ionomer as a layer component,
- a fourth layer from the outside contains adhesion promoter as a layer component,
- a fifth layer from the outside contains EVOH as a layer component,
- a sixth layer from the outside contains adhesion promoter as a layer component,
- a seventh layer from the outside contains a polyolefin, preferably polyethylene, as a layer component.

2. The food casing or food film according to claim 1, **characterized in that** layers which contain a polyolefin, preferably polyethylene, as a layer component, alternatively also contain further polyolefins, polypropylene, EVA, EM(M)A, ionomers or blends of these, or the like.

3. The food casing or food film according to claim 1 or 2, **characterized in that** layers which contain an adhesion promoter include an adhesion promoter on the basis of PE, PP, EVA, EM(M)A or of an ionomer as a base material.

4. The food casing or food film according to any one of claims 1 to 3, **characterized in that** layers which include an adhesion promoter alternatively contain a blend of polyolefin and adhesion promoter or a blend of EVA and/or EM(M)A and adhesion promoter or ionomer and adhesion promoter, or various adhesion promoters or blends thereof, respectively, in the single layers.

5. The food casing or food film according to any one of claims 1 to 4, **characterized in that** layers which include EVOH as a layer component alternatively contain MXD6 (modified polyamide 6).

6. The food casing or food film according to any one of claims 1 to 5, **characterized in that** layers which include EVOH as a layer component alternatively contain PVA (polyvinyl alcohol).

7. The food casing or food film according to any one of claims 1 to 6, **characterized in that** layers which include EVOH, PVA or MXD6 alternatively contain blends of these starting materials with PA.

8. The food casing or food film according to any one of claims 1 to 7, **characterized in that** it is fashioned as a food packaging having the form of a shrink bag or a sealable film.

## Revendications

1. Emballage ou feuille d'aliment plat ou cylindrique multicouche, étiré biaxialement dans le procédé Tripple Bubble et fabriqué dans le procédé de soufflage par buse pour des emballages alimentaires, **caractérisé par** la structure par couche suivante comptée de l'extérieur vers l'intérieur, avec au moins sept couches, **caractérisé en ce que** :
- une première couche contient de l'extérieur, comme constituant de couche, du polycaprolactame (PA6), du polyhexaméthylèneadipinamide (PA66), PA6/66, PA11, PA 12 ou des mélanges de ces polyamides ; de la polyoléfine, de préférence PP ou HDPE ou des mélanges de différentes polyoléfines ; COC ou un mélange de COC et d'une polyoléfine ; PC (polycarbonate) ; ou PS (polystyrène),
- une deuxième couche contient de l'extérieur, comme constituant de couche, un agent adhésif,
- une troisième couche contient de l'extérieur, comme constituant de couche, un ionomère,
- une quatrième couche contient de l'extérieur, comme constituant de couche, un agent adhésif,
- une cinquième couche contient de l'extérieur, comme constituant de couche, de l'EVOH,
- une sixième couche contient de l'extérieur, comme constituant de couche, un agent adhésif,
- une septième couche contient de l'extérieur, comme constituant de couche, une polyoléfine, de préférence du polyéthylène.

2. Emballage ou feuille d'aliment selon la revendication 1, **caractérisé en ce que** des couches qui contiennent une polyoléfine, de préférence du polyéthylène comme constituant de couche, contiennent en variante aussi d'autres polyoléfines, du polypropylène, de l'EVA, de l'EM(M)A, des ionomères ou des mélanges de ceux-ci ou similaires.

3. Emballage ou feuille d'aliment selon la revendication 1 ou 2, **caractérisé en ce que** des couches qui contiennent un agent adhésif, présentent un agent adhésif qui est à base de PE, PP, EVA, EM(M)A ou d'un ionomère comme substance de base.

4. Emballage ou feuille d'aliment selon l'une quelconque des revendications 1 à 3, **caractérisé en ce que** des couches qui présentent un agent adhésif, contiennent en variante un mélange de polyoléfine et d'agent adhésif ou un mélange d'EVA et/ou d'EM(M)A et d'agent adhésif ou d'ionomère et d'agent adhésif ou différents agents adhésifs ou des mélanges de ceux-ci dans les couches individuelles.

5. Emballage ou feuille d'aliment selon l'une quelconque des revendications 1 à 4, **caractérisé en ce que** des couches qui présentent de l'EVOH comme constituant de couche, contiennent en variante du MXD6 (polyamide 6 modifié).

6. Emballage ou feuille d'aliment selon l'une quelconque des revendications 1 à 5, **caractérisé en ce que** des couches qui présentent de l'EVOH comme constituant de couche, contiennent en variante du PVA (alcool de polyvinyle).

7. Emballage ou feuille d'aliment selon l'une quelconque des revendications 1 à 6, **caractérisé en ce que** des couches qui présentent de l'EVOH, PVA ou MXD6, contiennent en variante des mélanges de ces matières premières avec du PA.

8. Emballage ou feuille d'aliment selon l'une quelconque des revendications 1 à 7, **caractérisé en ce que** celle-ci est configurée comme emballage alimentaire sous la forme d'un sachet rétractable ou d'une feuille scellable.
